# EUROPEAN PATENT SPECIFICATION

(11) **EP 2 431 117 B1**
(45) Date of publication and mention of the grant of the patent: **03.05.2017**
(21) Application number: 10009713.8
(22) Date of filing: 16.09.2010
(51) Int. Cl.: B23D 61/12, B27B 21/04

(54) **Hand-saw blade, hand-saw having the same and method of manufacturing the hand-saw blade**
Handsägeblatt, Handsäge damit und Verfahren zur Herstellung des Handsägeblatts
Lame de scie à main, scie à main l'utilisant et procédé de fabrication de la lame de scie à main

(43) Date of publication of application: 21.03.2012
(73) Proprietor: Babaev, Azer, Moskau 129345 (RU)
(72) Inventor: Babaev, Azer, Moskau 129345 (RU)
(74) Representative: Diehl & Partner GbR

(56) References cited:
- GB-A- 2 439 291
- US-A- 1 306 165
- US-A- 3 213 910
- US-A- 3 262 475
- US-A1- 2004 187 320
- US-A1- 2006 016 315

## Description

A hand-saw blade, a hand-saw having the same and a method of manufacturing the hand-saw blade is disclosed.

Hand-saws using a blade with an abrasive edge to cut through materials that are softer than the blade are used in various fields such as forestry, construction, demolition, medicine, and hunting, to give a few examples. The blade can be made of brass, steel or ceramics, for example. The materials cut by hand-saws are e.g. wood, stone, plastics, or metal.

There are different types of hand-saws:

Handsaws, also known as 'panel saws' and 'fish saws' consist of a blade and a handle attached to the blade. Often, the blade is oblong, wedge-shaped or even trapezoid-shaped, for example. Teeth are provided along a long edge of the blade while the handle is attached to one short edge of the blade. In case of the wedge- or trapezoid-shaped blade, having two narrow edges, the handle frequently is attached to the wider of the two narrow edges of the blade. A special type of handsaw is a backsaw having a stiffening rib on the edge opposite the cutting edge of the blade.

A bow saw is a saw having a bow-shaped metal-frame and an oblong hard blade clamped between two ends of the metal-frame.

The teeth of the saw can be of different types, such as 'crosscut' and 'rip', for example. Crosscut teeth are shaped in such a way that they form a series of tiny knifelike edges. Rip teeth are shaped so that they form a series of tiny chisel-like edges. Furthermore, the teeth can be designed in a way that the saw cuts only on the pull stroke, or only on the push stroke, or both on the pull and push stroke. Thus, the blade has a cutting direction, wherein a cutting effect of the blade is greater when it is moved in the cutting direction relative to a material to be cut as compared to a cutting effect of the blade when it is moved in a direction opposite to the cutting direction relative to the material to be cut.

Document US 1,306,165 discloses a handsaw having a blade containing geometrical symbols and cuts for measuring purposes.

Another handsaw having a blade with cuts is disclosed in US 6,886,261. The cuts are teardrop shaped and arranged in a straight line along the length of the blade. Arranging a sidewall of the blade in parallel to a material to be cut in a way that a handle of the blade contacts an edge of the material and inserting the tip of a utility knife into one of the cuts allows guiding the knife in parallel to a handle of the handsaw when the handle is moved along the edge of the material.

A saw blade having the features of the preamble of independent claim 1 is known from both US 2006/0016315 A1 and GB 2 439 291.

It is a disadvantage with known hand-saws to be worked by hand using a blade with an abrasive edge that the efficiency of sawing is unsatisfactory.

It is the object of the present invention to provide a hand-saw-blade for a hand-saw providing increased efficiency of sawing.

The above object is solved by the combination of features of the independent claims. Preferred embodiments are defined in the dependent claims.

In this respect, the term "hand-saw" denotes any saw suitable to be worked by hand such as but not limited to handsaws and bow saws. In consequence, a hand-saw-blade is a blade of a saw to be worked by hand in contrast to a blade of a saw powered by steam, water, electricity or other power.

According to an embodiment a hand-saw-blade has a first edge provided with saw teeth and a plurality of elongated apertures spaced apart in a direction of the first edge, wherein a direction of elongation of the elongated apertures is oriented including an angle of between 15° and 65° and especially between 20° and 55° and further especially between 25° and 45° relative to the first edge.

The tilted orientation of the elongated apertures with respect to the first edge causes chips that are produced during sawing and have entered the elongated apertures to be moved away from the teeth. In consequence, the chips are not effected multiple times by the teeth. Furthermore, by removing the chips, friction between the hand-saw-blade and a material to be cut is reduced, preventing sticking of the hand-saw-blade in the material to be cut. Moreover, by providing the apertures, a contact surface between the hand-saw-blade and the material to be cut is lowered, reducing friction between the hand-saw-blade riding along the material to be cut. Further, chips in the cutting area, as well as fibers protruding from the cut material, generate a pressure on an edge of the elongated apertures located opposite to a direction of movement of the hand-saw-blade. Due to the tilted orientation of the elongated apertures this pressure has a component pressing the teeth of the first edge of the hand-saw-blade against the material to be cut. In consequence, provision of the tilted elongated apertures increased sawing efficiency of the hand-saw-blade.

Naturally, it is not excluded that saw teeth are further provided at edges of the hand-saw-blade other than the first edge. For example, saw teeth may further be provided at a second edge opposite to the first edge.
According to an embodiment, a line orthogonal to the first edge intersects two or more elongated apertures. Thus, the elongated apertures can be arranged overlapping each other when seen in a direction from the first edge of the hand-saw-blade. This overlap guarantees a particularly efficient removal of the chips.

According to the invention, the hand-saw-blade has a cutting direction oriented along the direction of the first edge, wherein a cutting effect of the hand-saw-blade is greater when it is moved in the cutting direction relative to a material to be cut as compared to a cutting effect of the hand-saw-blade when it is moved in a direction opposite to the cutting direction relative to the material to be cut.
In this case, a first end of the elongated aperture located closer to the first edge may be displaced in the cutting direction relative to a second end of the elongated aperture located closer to a second edge located opposite to the first edge. This guarantees that the hand-saw-blade is pressed against the material when moved in the cutting direction due to pressure generated by chips and fibers in the cutting area on an edge of the elongated apertures located opposite to a direction of movement of the hand-saw-blade.

According to the invention, a maximum distance between the elongated apertures and the first edge measured orthogonal to the first edge is smaller than 0.5-times and in particular smaller than 0.3-times and further in particular smaller than 0.25-times and further in particular smaller than 0.1-times the length of the elongated apertures measured along the direction of elongation. This maximum distance is measured with respect to the utmost end of the teeth. Thus, the elongated apertures are located close to the first edge.

According to an embodiment, a distance between the elongated apertures and the first edge measured orthogonal to the first edge is larger than 0.5-times and in particular larger than 0.75-times and further in particular larger than 1-time and further in particular larger than 1.25-times the width of the elongated apertures measured in a direction orthogonal to the direction of elongation of the elongated apertures. This guarantees sufficient strength of the first edge having the teeth.

The elongated apertures of a particular hand-saw-blade may all have the same or even different distances between the elongated apertures and the first edge measured orthogonal to the first edge.

According to an embodiment, the hand-saw-blade has a second edge located opposite to the first edge, and a length of the elongated apertures measured along the direction of elongation is greater than 0.1-times and in particular greater than 0.25-times and further in particular greater than 0.5-times and further in particular greater than 0.8-times a maximum distance between the first and second edges. This maximum distance is measured with respect to the utmost end of the teeth. This guarantees that chips of the material to be cut can be sufficiently removed from the first edge and thus the teeth.

According to this embodiment, a length of the elongated apertures measured along the direction of elongation may be smaller than 6-times and in particular smaller than 4-times and further in particular smaller than 2-times and further in particular smaller than 1.5-times a maximum distance between the first and second edges to guarantee that the hand-saw-blade is not weakened too much by the elongated apertures.

According to an embodiment a width of the elongated apertures measured in a direction orthogonal to the direction of elongation of the elongated apertures is smaller than 0.5-times and in particular smaller than 0.3-times and further in particular smaller than 0.2-times and further in particular smaller than 0.1-times the length of the elongated apertures measured along the direction of elongation and/or a width of the elongated apertures measured in a direction orthogonal to the direction of elongation of the elongated apertures is smaller than 10-times and in particular smaller than 8-times and further in particular smaller than 6-times and further in particular smaller than 5-times the thickness of the hand-saw-blade. In this respect, the thickness is understood to be the width of the blade. This width guarantees that the hand-saw-blade is not weakened too much by the elongated apertures.

According to this embodiment, a width of the elongated apertures measured in a direction orthogonal to the direction of elongation of the elongated apertures may be larger than 0.05-times and in particular larger than 0.07-times and further in particular larger than 0.08-times and further in particular larger than 0.09-times the length of the elongated apertures measured along the direction of elongation and/or a width of the elongated apertures measured in a direction orthogonal to the direction of elongation of the elongated apertures may be larger than 1-time and in particular larger than 2-times and further in particular larger than 3-times and further in particular larger than 4-times the thickness of the hand-saw-blade. In this respect, the thickness is understood to be the width of the blade. This width guarantees a good transportation of chips of the cut material.

According to an embodiment the elongated apertures cover more than 1 % and in particular more than 5 % and further in particular more than 10 % and further in particular more than 15 % of a total surface of a plane defined by outer edges of the hand-saw-blade. This guarantees that a satisfying increase of sawing efficiency.

According to this embodiment the elongated apertures may cover less than 60 % and in particular less than 40 % and further in particular less than 30 % and further in particular less than 25 % of a total surface of a plane defined by outer edges of the hand-saw-blade. This guarantees that the hand-saw-blade is not weakened too much by the elongated apertures.

According to an embodiment, a length of the elongated apertures measured along the direction of elongation is greater than 5 mm and in particular greater than 10 mm and further in particular greater than 20 mm and further in particular greater than 30 mm and/or a width of the elongated apertures measured in a direction orthogonal to the direction of elongation of the elongated apertures is between 15 mm and 1 mm and in particular between 12 mm and 2 mm and further in particular between 9 mm and 3 mm and further in particular between 6 mm and 4 mm.

According to an embodiment more that 5 and in particular more than 10 and further in particular more than 20 elongated apertures are spaced apart and in particular equally spaced apart in a direction of the first edge.

The elongated apertures may have an oblong or curved shape, for example. The elongated apertures of a particular hand-saw-blade may all have the same or even different shapes. Furthermore, the elongated apertures of a particular hand-saw-blade may all have the same or even different sizes.

A hand-saw according to an embodiment has a hand-saw-blade as described above and a handle mounted at one edge of the hand-saw-blade other than the first edge. Instead of the handle the hand-saw may have a bow-shaped metal-frame, wherein ends of the bow-shaped metal-frame are attached to opposing edges of the hand-saw-blade different from the first edge.

According to an embodiment, a method of manufacturing a hand-saw-blade comprises the steps of providing a piece of metal or ceramics in at least one of an oblong, wedge or trapezoid shape, cutting saw teeth along a first edge of the piece of metal or ceramics, and cutting a plurality of elongated apertures spaced apart in a direction of the first edge into the piece of metal or ceramics, wherein a direction of elongation of the elongated apertures is oriented including an angle of between 15° and 65° and especially between 20° and 55° and further especially between 25° and 45° relative to the first edge. The steps of cutting the saw teeth and cutting the elongated apertures can be performed in any order or even at the same time.

According to an embodiment, the elongated apertures are cut by laser cutting and/or the teeth are cut by grinding or filing.

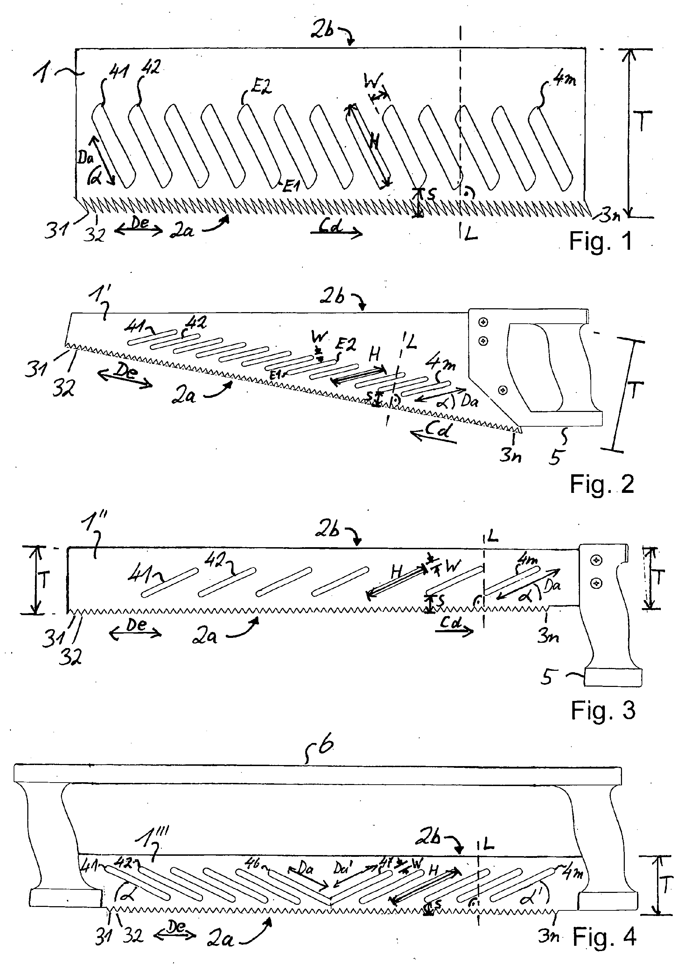

In the following, preferred embodiments are described by referring to the enclosed figures. In the figures, identical or similar elements are denoted by identical or similar reference signs. In the figures,
Figure 1 is a schematic side-view of a hand-saw-blade - according to an embodiment of the invention;
Figure 2 is a schematic side-view of a handsaw having a hand-saw-blade according to an embodiment of the invention;
Figure 3 is a schematic side-view of a backsaw having a hand-saw-blade not according to an embodiment of the invention; and
Figure 4 is a schematic side-view of a bow saw having a hand-saw-blade not according to an embodiment of the invention.
In the following, a hand-saw-blade (henceforth, 'blade') according to an embodiment is described with reference to Figure 1. Figure 1 is a schematic side view of the blade.
The blade 1 is made of a hard sheet of steel having a thickness of 2 mm (in the art also referred to as width). However, the present invention is neither restricted to the use of steel nor to a thickness of 2 mm. As alternatives, other metals such as copper or iron, or other materials such as ceramics may be used for the blade. Furthermore, the thickness may vary extensively; thicknesses of 0.1 mm to 5 mm are common and depend on the material to be cut.
A number of saw teeth 31, 32, ... 3n (n being a natural number) are provided along a first edge 2a of the hand-saw-blade 1. In the present embodiment, the saw teeth 31, 32, ... 3n are shaped such that the blade 1 has a cutting direction Cd along a direction De of the first edge 2a. The cutting effect of the blade 1 is greater when it is moved in the cutting direction Cd relative to a material to be cut (not shown) as compared to a cutting effect of the blade 1 when it is moved in a direction opposite to the cutting direction Cd, relative to a material to be cut. In Figure 1, the saw teeth 31, 32, ... 3n are of the cross-cut type. However, the present invention is not restricted to a certain type of saw teeth. Alternatively, saw teeth of a rip type can be used, for example. Thirteen elongated apertures 41, 42, ... 4m (henceforth 'apertures') (m being a natural number) extending through the blade 1 in the thickness direction are provided spaced apart in the direction De of the first edge 2a. The apertures 41, 42, ... 4m are oriented such that a direction Da of elongation of the apertures 41, 42, ... 4m includes an angle α of 65°, relative to the first edge 2a. However, it is emphasised that the present invention is neither restricted to a certain number of apertures nor to an angle α of 65°. For the purposes of the present invention it is sufficient if more than two apertures are provided and if the angle α ranges from 15° to 65°. Provision of apertures having such an angle allows the removal of chips of cut material away from the first edge 2a. Furthermore, this orientation of the apertures 41, 42, ... 4m causes additional pressure towards the material to be cut when the blade 1 is moved in the cutting direction Cd.
In the present example the length of the apertures 41, 42, ... 4m is 22 mm. In the present embodiment, all apertures 41, 42, ... 4m have the same size and shape and are equally spaced apart from each other. Although apertures having an oblong shape are shown in the figures, a variety of alternative shapes (e.g. arc shape) may be used.

As can be seen from Figure 1, the apertures 41, 42, ... 4m are arranged such that a line L, orthogonal to the first edge 2a intersects two of the apertures 41, 42, ... 4m. However, the present invention is not restricted to such an intersection. Alternatively, the apertures 41, 42, ... 4m may be arranged such that a line L orthogonal to the first edge 2a intersects only one aperture or more than two of the apertures.

As the direction Da of elongation of the apertures 41, 42, ... 4m is inclined with respect to the first edge 2a, a first end E1 of the apertures 41, 42, ... 4m located closer to the first edge 2a is displaced in the cutting direction Cd relative to a second end E2 of the same aperture 41, 42, ... 4m. This second end E2 is located closer to a second edge 2b opposite to the first edge 2a of the blade 1.

In the embodiment shown in Figure 1, a maximum distance S between the apertures 41, 42, ... 4m and the outer end of the saw teeth 31, 32, ... 3n on the first edge 2a measured orthogonal to the first edge 2a is 0.3-times the length H of the elongated apertures 41, 42, ... 4m measured along the direction Da of elongation. When compared with the width W of the apertures 41, 42, ... 4m measured in a direction orthogonal to the direction Da of elongation, the maximum distance S between the apertures 41, 42, ... 4m and the outer end of the saw teeth 31, 32, ... 3n on the first edge 2a of the blade 1 is two times the width W of the apertures 41, 42, ... 4m. However, the present invention is not restricted to such values for the maximum distance S between the apertures 41, 42, ... 4m and the outer end of the saw teeth 31, 32, ... 3n on the first edge 2a measured orthogonal to the first edge 2a. It is usually sufficient that the maximum distance S is smaller than 0.5-times the length H of the apertures 41, 42, ... 4m measured along the direction Da of elongation, but larger than 0.5-times the width W of the apertures 41, 42, ... 4m measured in a direction orthogonal to the direction of elongation Da of the apertures 41, 42, ... 4m. Such an arrangement of the apertures 41, 42, ... 4m with respect to the first edge 2a guarantees that the apertures are located close enough to the first edge 2a having the saw teeth 31, 32, ... 3n to efficiently remove chips of cut material, and also to maintain sufficient strength in the first edge 2a.

Furthermore, in the embodiment shown in Figure 1, the length H of the apertures 41, 42, ... 4m measured along the direction Da of elongation is 0.5-times a maximum distance T between the first and second edges 2a, 2b and thus 0.5-times a height of the blade 1. However, the present invention is not restricted to such values. It is usually sufficient that the length H of the apertures 41, 42, ... 4m is greater than 0.1-times but smaller than 6-times this maximum distance T.

In the present embodiment, the width W of the apertures 41, 42, ... 4m measured in a direction orthogonal to the direction Da of the apertures 41, 42, ... 4m is 0.16-times the length of the apertures measured in the direction of elongation Da. As the width W in the present case is 4 mm, it is 2-times the thickness of the hand-saw-blade. However, the present invention is not restricted to such values. It is usually sufficient that the width W of the apertures 41, 42, ... 4m is at least one of smaller than 0.5-times the length H of the apertures 41, 42, ... 4m but larger than 0.05-times the length of the apertures 41, 42, ... 4m, and smaller than 10-times but larger than 1-time the thickness of the blade 1.

With respect to the total surface of the blade 1 shown in Figure 1, approximately 20 % is covered by the apertures 41, 42, ... 4m. However, the present invention is not restricted to such a value. It is usually sufficient that more than 1 % but less than 60 % of the total surface of a plane defined by the outer edges 2a, 2b of the blade 1 is covered by the apertures 41, 42, ... 4m.

In the following different examples of hand-saws having a blade similar to the blade described above will be disclosed. To avoid unnecessary repetitions, reference is made to the embodiment shown in Figure 1. Only differences will be discussed in more detail.

Figure 2 shows a schematic side-view of a handsaw having a blade 1'.

This blade 1' differs from the blade of Figure 1 in that the overall shape of the blade 1 is that of a wedge. In Figure 2, the material used for the blade 1' is copper. A handle 5 is mounted to an edge of the blade 1 other than the first and second edges 2a, 2b.

Furthermore, the angle α included by a direction Da of elongation of the apertures 41, 42, ... 4m and the first edge 2a having the saw teeth 31, 32, ... 3n is only 25°.

A length H of the apertures 41, 42, ... 4m measured in the direction Da of elongation is 82 mm and a width W measured in a direction orthogonal to the direction Da of elongation is 3 mm. Thus, the width W is 0.07-times the length H. In comparison to a maximum distance T between the first and second edges 2a, 2b, the length H of the apertures is 0.45-times this maximum distance T.

A schematic side view of a back-saw is shown in Figure 3.

A handle 5 is attached to an edge of the oblong blade 1'' orthogonal to the first and second edges 2a, 2b. In this embodiment, the blade 1'' consists of ceramics.

About 10 % of the surface of this blade 1'' is covered by a total number of seven elongated apertures 41, 42, ... 4m that are regularly spaced apart in a direction Da. The direction Da of elongation of these apertures 41, 42, ... 4m and the first edge 2a include an angle α of 25°. A maximum distance S between the apertures 41, 42, ... 4m and the outermost part of the saw teeth 31, 32, ... 3n provided along the first edge 2a is 0.25-times the length H of the apertures 41, 42, ... 4m measured along the direction Da of elongation of the apertures 41, 42, ... 4m. In this embodiment, this distance S is 6 mm, the length H of the apertures 41, 42, ... 4m is 34 mm and the width W of the apertures 41, 42, ... 4m is 4 mm. As a maximum distance T between the first and second edges 2a, 2b of the blade is also 34 mm, the length of the apertures is about the same as this maximum distance T.

In Figure 3, the blade 1'' has saw teeth 31, 32, ... 3n that are shaped in an Asian style, thus having a cutting direction Cd towards the handle 5, whereas the hand saw of Figure 2 has a cutting direction Cd which is in the opposite direction, i.e. orientated away from the handle 5. Thus, the saw of Figure 2 is most effective when it is pushed, while the saw of Figure 3 is most effective when it is pulled.

A side view of a hand-saw consisting of a blade 1''' and a bow shaped metal frame 6 is shown in Figure 4.

The ends of the bow shaped metal frame 6 are attached to opposite edges of the blade 1''', different from the first and second edges 2a, 2b.

The saw teeth 31, 32, ... 3n of the blade 1''' shown in Figure 4 are shaped in the rip cut and have no preferred cutting direction. Thus, the teeth 31, 32, ... 3n are shaped in such a way that the cutting effect relative to a material to be cut is not dependent on the direction of movement along the first edge 2a.

Approximately 21 % of the surface of the blade 1''' are covered by apertures 41, 42, ... 4m. A first group of elongated apertures 41, 42, ... 46 are oriented in mirror inversion to a second group of elongated apertures 47, ... 4m.

Due to the provision of the inclined elongated apertures in the above described saws, chips of cut material can be removed from the saw teeth of the blade. This increases the efficiency of sawing, as the chips are not worked several times. Moreover, friction between the blade and material being cut is lowered.

## Claims

1. Hand-saw-blade (1; 1'; 1'' ; 1''') having:
a first edge (2a) provided with saw teeth (31-3n); and
a plurality of elongated apertures (41-4m) spaced apart in a direction (De) of the first edge (2a);
wherein a direction (Da; Da') of elongation of the elongated apertures (41-4m) is oriented including an angle (α, α') of between 15° and 65° and especially between 20° and 55° and further especially between 25° and 45° relative to the first edge (2a); and
wherein the hand-saw-blade (1; 1') has a cutting direction (Cd) oriented along the direction (De) of the first edge (2a), wherein a cutting effect of the hand-saw-blade (1; 1') is greater when it is moved in the cutting direction (Cd) relative to a material to be cut as compared to a cutting effect of the hand-saw-blade (1; 1') when it is moved in a direction opposite to the cutting direction (Cd) relative to the material to be cut;
**characterized in that**
a first end (E1) of the elongated aperture (41-4m) located closer to the first edge (2a) is displaced in the cutting direction (Cd) relative to a second end (E2) of the elongated aperture (41-4m) located closer to a second edge (2b) located opposite to the first edge (2a); and
a maximum distance (S) between the elongated apertures (41-4m) and the first edge (2a) measured orthogonal to the first edge (2a) is smaller than 0.5-times and in particular smaller than 0.3-times and further in particular smaller than 0.25-times and further in particular smaller than 0.1-times the length (H) of the elongated apertures (41-4m) measured along the direction (Da; Da') of elongation.

2. Hand-saw-blade (1; 1'; 1''') according to claim 1, wherein a line (L) orthogonal to the first edge (2a) intersects two or more elongated apertures (41-4m).

3. Hand-saw-blade (1; 1'; 1''; 1''') according to claim 1 or 2, wherein a maximum distance (S) between the elongated apertures (41-4m) and the first edge (2a) measured orthogonal to the first edge (2a) is larger than 0.5-times and in particular larger than 0.75-times and further in particular larger than 1-time and further in particular larger than 1.25-times the width (W) of the elongated apertures (41-4m) measured in a direction orthogonal to the direction (Da; Da') of elongation of the elongated apertures (41-4m).

4. Hand-saw-blade (1; 1'; 1''; 1''') according to one of claims 1, 2 or 3,
wherein the hand-saw-blade (1; 1'; 1''; 1''') has a second edge (2b) located opposite to the first edge (2a), and
wherein a length (H) of the elongated apertures (41-4m) measured along the direction (Da; Da') of elongation is greater than 0.1-times and in particular greater than 0.25-times and further in particular greater than 0.5-times and further in particular greater than 0.8-times a maximum distance (T) between the first and second edges (2a, 2b).

5. Hand-saw-blade (1; 1'; 1'' ; 1''') according to one of claims 1 to 4,
wherein the hand-saw-blade (1; 1'; 1''; 1''') has a second edge (2b) located opposite to the first edge (2a), and
wherein a length (H) of the elongated apertures (41-4m) measured along the direction (Da; Da') of elongation is smaller than 6-times and in particular smaller than 4-times and further in particular smaller than 2-times and further in particular smaller than 1.5-times a maximum distance (T) between the first and second edges (2a, 2b).

6. Hand-saw-blade (1; 1'; 1'' ; 1''') according to one of claims 1 to 5, wherein a width (W) of the elongated apertures (41-4m) measured in a direction orthogonal to the direction (Da; Da') of elongation of the elongated apertures (41-4m) is smaller than 0.5-times and in particular smaller than 0.3-times and further in particular smaller than 0.2-times and further in particular smaller than 0.1-times the length (H) of the elongated apertures (41-4m) measured along the direction (Da; Da') of elongation and/or a width (W) of the elongated apertures (41-4m) measured in a direction orthogonal to the direction (Da; Da') of elongation of the elongated apertures (41-4m) is smaller than 10-times and in particular smaller than 8-times and further in particular smaller than 6-times and further in particular smaller than 5-times the thickness of the hand-saw-blade (1; 1'; 1''; 1''').

7. Hand-saw-blade (1; 1'; 1'' ; 1''') according to one of claims 1 to 6, wherein a width (W) of the elongated apertures (41-4m) measured in a direction orthogonal to the direction (Da; Da') of elongation of the elongated apertures (41-4m) is larger than 0.05-times and in particular larger than 0.07-times and further in particular larger than 0.08-times and further in particular larger than 0.09-times the length (H) of the elongated apertures (41-4m) measured along the direction (Da; Da') of elongation and/or a width (W) of the elongated apertures (41-4m) measured in a direction orthogonal to the direction (Da; Da') of elongation of the elongated apertures (41-4m) is larger than 1-time and in particular larger than 2-times and further in particular larger than 3-times and further in particular larger than 4-times the thickness of the hand-saw-blade (1; 1'; 1''; 1''').

8. Hand-saw-blade (1; 1'; 1''; 1''') according to one of claim 1 to 7, wherein the elongated apertures (41-4m) cover more than 1 % and in particular more than 5 % and further in particular more than 10 % and further in particular more than 15 % of a total surface of a plane defined by outer edges of the hand-saw-blade (1; 1'; 1'' ; 1''').

9. Hand-saw-blade (1; 1'; 1''; 1''') according to one of claim 1 to 8, wherein the elongated apertures (41-4m) cover less than 60 % and in particular less than 40 % and further in particular less than 30 % and further in particular less than 25 % of a total surface of a plane defined by outer edges of the hand-saw-blade (1; 1'; 1'' ; 1''').

10. Hand-saw-blade (1; 1'; 1'' ; 1''') according to one of claim 1 to 9, wherein a length (H) of the elongated apertures (41-4m) measured along the direction (Da; Da') of elongation is greater than 5 mm and in particular greater than 10 mm and further in particular greater than 20 mm and further in particular greater than 30 mm and/or a width (W) of the elongated apertures (41-4m) measured in a direction orthogonal to the direction (Da; Da') of elongation of the elongated apertures (41-4m) is between 15 mm and 1 mm and in particular between 12 mm and 2 mm and further in particular between 9 mm and 3 mm and further in particular between 6 mm and 4 mm.

11. Hand-saw-blade (1; 1'; 1'' ; 1''') according to one of claim 1 to 10, wherein more that 5 and in particular more than 10 and further in particular more than 20 elongated apertures (41-4m) are spaced apart, and in particular equally spaced apart, in a direction of the first edge (2a).

12. Hand-saw-blade (1; 1'; 1'' ; 1''') according to one of claim 1 to 10, wherein the elongated apertures (41-4m) have an oblong or curved shape.

13. Hand-saw having
a hand-saw-blade (1; 1'; 1'' ; 1''') according to one of the claims 1 to 12; and
a handle (5) or a bow-shaped metal-frame (6),
wherein the handle (5) is mounted at one edge of the hand-saw-blade (1; 1'; 1'') other than the first edge (2a) respectively ends of the bow-shaped metal-frame (6) are attached to opposing edges of the hand-saw-blade (1''') different from the first edge (2a).

## Patentansprüche

1. Handsägeblatt (1; 1'; 1''; 1''') aufweisend:
eine erste mit Sägezähnen (31-3n) versehene Kante (2a); und
eine Mehrzahl von in einer Richtung (De) der ersten Kante (2a) beabstandeten langgestreckten Öffnungen (41-4m);
wobei eine Richtung (Da; Da') der Erstreckung der langgestreckten Öffnungen (41-4m) so orientiert ist, dass sie einen Winkel (α, α') von zwischen 15° und 65° und insbesondere von zwischen 20° und 55° und weiter insbesondere von zwischen 25° und 45° bezogen auf die erste Kante (2a) einschließt; und
wobei das Handsägeblatt (1; 1') eine Schnittrichtung (Cd) aufweist, die entlang der Richtung (De) der ersten Kante (2a) orientiert ist, wobei ein schneidender Effekt des Handsägeblattes (1; 1') größer ist, wenn es relativ zu einem zu schneidenden Material in die Schnittrichtung (Cd) bewegt wird im Vergleich zu dem schneidenden Effekt, wenn das Handsägeblatt (1; 1') in eine Richtung entgegengesetzt zu der Schnittrichtung (Cd) relativ zu dem zu schneidenden Material bewegt wird;
**dadurch gekennzeichnet, dass**
ein erstes Ende (E1) der langgestreckten Öffnung (41-4m), welches näher an der ersten Kante (2a) angeordnet ist, relativ zu einem zweiten Ende (E2) der langgestreckten Öffnung (41-4m), welche näher an einer zweiten Kante (2b) angeordnet ist, welche der ersten Kante (2a) gegenüberliegt, in die Schnittrichtung (Cd) verlagert ist; und
ein maximaler Abstand (S) zwischen den langgestreckten Öffnungen (41-4m) und der ersten Kante (2a) gemessen orthogonal zu der ersten Kante (2a) kleiner als ein 0,5-faches, und insbesondere kleiner als ein 0,3-faches und weiter insbesondere kleiner als ein 0,25-faches und weiter insbesondere kleiner als ein 0,1-faches der Länge (H) der langgestreckten Öffnungen (41-4m) gemessen entlang der Richtung (Da; Da') der Längserstreckung ist.

2. Handsägeblatt (1; 1'; 1''') gemäß Anspruch 1, wobei eine Linie (L), welche orthogonal zu der ersten Kante (2a) verläuft, zwei oder mehr langgestreckte Öffnungen schneidet (41-4m).

3. Handsägeblatt (1; 1'; 1''; 1''') gemäß Anspruch 1 oder 2, wobei ein größter Abstand (S) zwischen den langgestreckten Öffnungen (41-4m) und der ersten Kante (2a) gemessen orthogonal zu der ersten Kante (2a) größer als ein 0,5-faches und insbesondere größer als ein 0,75-faches und weiter insbesondere größer als ein 1-faches und weiter insbesondere größer als ein 1,25-faches der Breite (W) der langgestreckten Öffnungen (41-4m) gemessen in einer Richtung orthogonal zu der Richtung (Da; Da') der Längserstreckung der langgestreckten Öffnungen (41-4m) ist.

4. Handsägeblatt (1; 1'; 1''; 1''') gemäß einem der Ansprüche 1, 2 oder 3,
wobei das Handsägeblatt (1; 1'; 1''; 1''') eine zweite Kante (2b) aufweist, die der ersten Kante (2a) gegenüberliegend angeordnet ist, und
wobei eine Länge (H) der langgestreckten Öffnungen (41-4m) gemessen entlang der Richtung (Da; Da') der Längserstreckung größer als ein 0,1-faches und insbesondere größer als ein 0,25-faches und weiter insbesondere größer als ein 0,5-faches und weiter insbesondere größer als ein 0,8-faches eines maximalen Abstandes (T) zwischen den ersten und zweiten Kanten (2a, 2b) ist.

5. Handsägeblatt (1; 1'; 1''; 1''') gemäß einem der Ansprüche 1 bis 4,
wobei das Handsägeblatt (1; 1'; 1"; 1''') eine zweite Kante (2b) aufweist, welche der ersten Kante (2a) gegenüberliegend angeordnet ist, und
wobei eine Länge (H) der langgestreckten Öffnungen (41-4m) gemessen entlang der Richtung (Da; Da') der Längserstreckung kleiner als ein 6-faches und insbesondere kleiner als ein 4-faches und weiter insbesondere kleiner als ein 2-faches und weiter insbesondere kleiner als ein 1,5-faches eines maximalen Abstandes (T) zwischen den ersten und zweiten Kanten (2a, 2b) ist.

6. Handsägeblatt (1; 1'; 1"; 1''') gemäß einem der Ansprüche 1 bis 5, wobei eine Breite (W) der langgestreckten Öffnungen (41-4m) gemessen in eine Richtung orthogonal zu der Richtung (Da; Da') der Längserstreckung der langgestreckten Öffnungen (41-4m) kleiner als ein 0,5-faches und insbesondere kleiner als ein 0,3-faches und weiter insbesondere kleiner als ein 0,2-faches und weiter insbesondere kleiner als 0,1-faches der Länge (H) der langgestreckten Öffnungen (41-4m) gemessen entlang der Richtung (Da; Da') der Längserstreckung ist und/oder eine Breite (W) der langgestreckten Öffnungen (41-4m) gemessen in eine Richtung orthogonal zu der Richtung (Da; Da') der Längserstreckung der langgestreckten Öffnungen (41-4m) kleiner als ein 10-faches und insbesondere kleiner als ein 8-faches und weiter insbesondere kleiner als ein 6-faches und weiter insbesondere kleiner als ein 5-faches der Dicke des Handsägeblattes (1; 1'; 1''; 1''') ist.

7. Handsägeblatt (1; 1'; 1''; 1''') gemäß einem der Ansprüche 1 bis 6, wobei eine Breite (W) der langgestreckten Öffnungen (41-4m) gemessen in einer Richtung orthogonal zu der Richtung (Da; Da') der Längserstreckung der langgestreckten Öffnungen (41-4m) größer als ein 0,05-faches und insbesondere größer als ein 0,07-faches und weiter insbesondere größer als ein 0,08-faches und weiter insbesondere größer als 0,09-faches der Länge (H) der langgestreckten Öffnungen (41-4m) ist, gemessen entlang der Richtung (Da; Da') der Längserstreckung und/oder eine Breite (W) der langgestreckten Öffnungen (41-4m) gemessen in einer Richtung orthogonal zu der Richtung (Da; Da') der Längserstreckung der langgestreckten Öffnungen (41-4m) größer als ein 1-faches und insbesondere größer als ein 2-faches und weiter insbesondere größer als ein 3-faches und weiter insbesondere größer als ein 4-faches der Dicke des Handsägeblattes (1; 1'; 1''; 1''') ist.

8. Handsägeblatt (1; 1'; 1''; 1''') gemäß einem der Ansprüche 1 bis 7, wobei die langgestreckten Öffnungen (41-4m) mehr als 1 % und insbesondere mehr als 5 % und weiter insbesondere mehr als 10 % und weiter insbesondere mehr als 15 % einer Gesamtoberfläche einer durch äußere Kanten des Handsägeblattes (1; 1'; 1''; 1''') definierten Ebene einnehmen.

9. Handsägeblatt (1; 1'; 1''; 1''') gemäß einem der Ansprüche 1 bis 8, wobei die langgestreckten Öffnungen (41-4m) weniger als 60 % und insbesondere weniger als 40 % und weiter insbesondere weniger als 30 % und weiter insbesondere weniger als 25 % einer Gesamtoberfläche einer durch äußere Kanten des Handsägeblattes (1; 1'; 1''; 1''') definierten Ebene einnehmen.

10. Handsägeblatt (1; 1'; 1''; 1''') gemäß einem der Ansprüche 1 bis 9, wobei eine Länge (H) der langgestreckten Öffnungen (41-4m) gemessen entlang der Richtung (Da; Da') der Längserstreckung größer als 5 mm und insbesondere größer als 10 mm und weiter insbesondere größer als 20 mm und weiter insbesondere größer als 30 mm ist und/oder eine Breite (W) der langgestreckten Öffnungen (41-4m) gemessen in einer Richtung orthogonal zu der Richtung (Da; Da') der Längserstreckung der langgestreckten Öffnungen (41-4m) zwischen 15 mm und 1 mm und insbesondere zwischen 12 mm und 2 mm und weiter insbesondere zwischen 9 mm und 3 mm und weiter insbesondere zwischen 6 mm und 4 mm beträgt.

11. Handsägeblatt (1; 1'; 1"; 1''') gemäß einem der Ansprüche 1 bis 10, wobei mehr als 5 und insbesondere mehr als 10 und weiter insbesondere mehr als 20 langgestreckte Öffnungen (41-4m) in eine Richtung der ersten Kante (2a) voneinander beabstandet und insbesondere voneinander regelmäßig beabstandet sind.

12. Handsägeblatt (1; 1'; 1''; 1''') gemäß einem der Ansprüche 1 bis 10, wobei die langgestreckten Öffnungen (41-4m) eine längliche oder gekrümmte Form aufweisen.

13. Handsäge aufweisend
ein Handsägeblatt (1; 1'; 1''; 1''') gemäß einem der Ansprüche 1 bis 12; und einen Griff (5) oder einen bogenförmigen Metallrahmen (6),
wobei der Griff (5) an einer Kante des Handsägeblattes (1; 1'; 1"; 1'''), welche eine andere als die erste Kante (2a) ist, befestigt ist bzw. Enden des bogenförmigen Metallrahmens (6) an sich gegenüberliegenden Kanten des Handsägeblattes (1'''), welche sich von der ersten Kante (2a) unterscheiden, befestigt sind.

## Revendications

1. Lame de scie à main (1 ; 1' ; 1'' ; 1''') ayant :
un premier bord (2a) muni de dents de scie (31-3n) ; et
une pluralité d'ouvertures allongées (41-4m) espacées dans une direction (De) du premier bord (2a) ;
dans laquelle une direction (Da ; Da') d'allongement des ouvertures allongées (41-4m) est orientée incluant un angle (α, α') entre 15° et 65° et spécialement entre 20° et 55° et encore plus spécialement entre 25° et 45° par rapport au premier bord (2a) ; et
dans laquelle la lame de scie à main (1 ; 1') a une direction de coupe (Cd) orientée le long de la direction (De) du premier bord (2a), dans lequel un effet coupant de la lame de scie à main (1 ; 1') est plus grand lorsqu'elle est déplacée dans la direction de coupe (Cd) par rapport à un matériau à découper par rapport à un effet coupant de la lame de scie à main (1 ; 1') lorsqu'elle est déplacée dans une direction opposée à la direction de coupe (Cd) par rapport au matériau à découper ;
**caractérisée en ce que**
une première extrémité (E1) de l'ouverture allongée (41-4m) située plus près du premier bord (2a) est déplacée dans la direction de coupe (Cd) par rapport à une seconde extrémité (E2) de l'ouverture allongée (41-4m) située plus près d'un second bord (2b) situé à l'opposé du premier bord (2a) ; et
une distance maximale (S) entre les ouvertures allongées (41-4m) et le premier bord (2a) mesurée orthogonale au premier bord (2a) est plus petite que 0,5 fois et en particulier plus petite que 0,3 fois et également en particulier plus petite que 0,25 fois et également en particulier plus petite que 0,1 fois la longueur (H) des ouvertures allongées (41-4m) mesurée le long de la direction (Da ; Da') d'allongement.

2. Lame de scie à main (1 ; 1' ; 1'' ; 1''') selon la revendication 1, dans laquelle une ligne (L) orthogonale au premier bord (2a) coupe deux ou plus de deux ouvertures allongées (41-4m).

3. Lame de scie à main (1 ; 1' ; 1'' ; 1''') selon la revendication 1 ou 2, dans laquelle une distance maximale (S) entre les ouvertures allongées (41-4m) et le premier bord (2a) mesurée orthogonale au premier bord (2a) est plus grande que 0,5 fois et en particulier plus grande que 0,75 fois et également en particulier plus grande que 1 fois et également en particulier plus grande que 1,25 fois la largeur (W) des ouvertures allongées (41-4m) mesurée dans une direction orthogonale à la direction (Da ; Da') d'allongement des ouvertures allongées (41-4m).

4. Lame de scie à main (1 ; 1' ; 1'' ; 1''') selon l'une des revendications 1, 2 ou 3,
dans laquelle la lame de scie à main (1 ; 1' ; 1'' ; 1''') a un second bord (2b) situé à l'opposé du premier bord (2a), et
dans laquelle une longueur (H) des ouvertures allongées (41-4m) mesurée le long de la direction (Da ; Da') d'allongement est plus grande que 0,1 fois et en particulier plus grande que 0,25 fois et également en particulier plus grande que 0,5 fois et également en particulier plus grande que 0,8 fois une distance maximale (T) entre les premier et second bords (2a, 2b).

5. Lame de scie à main (1 ; 1' ; 1'' ; 1''') selon l'une des revendications 1 à 4,
dans laquelle la lame de scie à main (1 ; 1' ; 1'' ; 1''') a un second bord (2b) situé à l'opposé du premier bord (2a), et
dans laquelle une longueur (H) des ouvertures allongées (41-4m) mesurée le long de la direction (Da ; Da') d'allongement est plus petite que 6 fois et en particulier plus petite que 4 fois et également en particulier plus petite que 2 fois et également en particulier plus petite que 1,5 fois une distance maximale (T) entre les premier et second bords (2a, 2b).

6. Lame de scie à main (1 ; 1' ; 1'' ; 1''') selon l'une des revendications 1 à 5, dans laquelle une largeur (W) des ouvertures allongées (41-4m) mesurée dans une direction orthogonale à la direction (Da ; Da') d'allongement des ouvertures allongées (41-4m) est plus petite que 0,5 fois et en particulier plus petite que 0,3 fois et également en particulier plus petite que 0,2 fois et également en particulier plus petite que 0,1 fois la longueur (H) des ouvertures allongées (41-4m) mesurée le long de la direction (Da ; Da') d'allongement et/ou une largeur (W) des ouvertures allongées (41-4m) mesurée dans une direction orthogonale à la direction (Da ; Da') d'allongement des ouvertures allongées (41-4m) est plus petite que 10 fois et en particulier plus petite que 8 fois et également en particulier plus petite que 6 fois et également en particulier plus petite que 5 fois l'épaisseur de la lame de scie à main (1 ; 1' ; 1'' ; 1''').

7. Lame de scie à main (1; 1' ; 1'' ; 1''') selon l'une des revendications 1 à 6, dans laquelle une largeur (W) des ouvertures allongées (41-4m) mesurée dans une direction orthogonale à la direction (Da ; Da') d'allongement des ouvertures allongées (41-4m) est plus grande que 0,05 fois et en particulier plus grande que 0,07 fois et également en particulier plus grande que 0,08 fois et également en particulier plus grande que 0,09 fois la longueur (H) des ouvertures allongées (41-4m) mesurée le long de la direction (Da ; Da') d'allongement et/ou une largeur (W) des ouvertures allongées (41-4m) mesurée dans une direction orthogonale à la direction (Da ; Da') d'allongement des ouvertures allongées (41-4m) est plus grande que 1 fois et en particulier plus grande que 2 fois et également en particulier plus grande que 3 fois et également en particulier plus grande que 4 fois l'épaisseur de la lame de scie à main (1 ; 1' ; 1'' ; 1''').

8. Lame de scie à main (1; 1' ; 1'' ; 1''') selon l'une des revendications 1 à 7, dans laquelle les ouvertures allongées (41-4m) couvrent plus de 1 % et en particulier plus de 5 % et également en particulier plus de 10 % et également en particulier plus de 15 % d'une surface totale d'un plan défini par des bords extérieurs de la lame de scie à main (1 ; 1' ; 1'' ; 1''').

9. Lame de scie à main (1 ; 1' ; 1'' ; ; 1''') selon l'une des revendications 1 à 8, dans laquelle les ouvertures allongées (41-4m) couvrent moins de 60 % et en particulier moins de 40 % et également en particulier moins de 30 % et également en particulier moins de 25 % d'une surface totale d'un plan défini par des bords extérieurs de la lame de scie à main (1 ; 1' ; 1'' ; 1''').

10. Lame de scie à main (1 ; 1' ; 1'' ; 1''') selon l'une des revendications 1 à 9, dans laquelle une longueur (H) des ouvertures allongées (41-4m) mesurée le long de la direction (Da ; Da') d'allongement est supérieure à 5 mm et en particulier supérieure à 10 mm et également en particulier supérieure à 20 mm et également en particulier supérieure à 30 mm et/ou une largeur (W) des ouvertures allongées (41-4m) mesurée dans une direction orthogonale à la direction (Da ; Da') d'allongement des ouvertures allongées (41-4m) est entre 15 mm et 1 mm et en particulier entre 12 mm et 2 mm et également en particulier entre 9 mm et 3 mm et également en particulier entre 6 mm et 4 mm.

11. Lame de scie à main (1 ; 1' ; 1'' ; 1''') selon l'une des revendications 1 à 10, dans laquelle plus de 5 et en particulier plus de 10 et également en particulier plus de 20 ouvertures allongées (41-4m) sont espacées les unes des autres, et en particulier espacées de manière égale, dans une direction du premier bord (2a).

12. Lame de scie à main (1 ; 1' ; 1'' ; 1''') selon l'une des revendications 1 à 10, dans laquelle les ouvertures allongées (41-4m) ont une forme oblongue ou incurvée.

13. Scie à main ayant
une lame de scie à main (1 ; 1' ; 1'' ; 1''') selon l'une des revendications 1 à 12 ; et
une poignée (5) ou une armature métallique en forme d'arceau (6),
dans laquelle la poignée (5) est montée sur un bord de la lame de scie à main (1 ; 1' ; 1'') autre que le premier bord (2a) respectivement et des extrémités de l'armature métallique en forme d'arceau (6) sont fixées à des bords opposés de la lame de scie à main (1''') différents du premier bord (2a).
